# EUROPEAN PATENT SPECIFICATION

(11) **EP 4 079 171 B1**
(45) Date of publication and mention of the grant of the patent: **10.12.2025**
(21) Application number: 21741057.0
(22) Date of filing: 15.01.2021
(51) Int. Cl.: A24F 40/46, A24F 40/57, H05B 1/02, H05B 3/14, A24F 40/51, A24F 40/20

(54) **COMPOSITE-TYPE TEMPERATURE RAISING AND CONTROL INTEGRATED HEATING ELEMENT AND TEMPERATURE CONTROL METHOD**
ZUSAMMENGESETZTES TEMPERATURERHÖHENDES UND -REGELNDES HEIZELEMENT UND TEMPERATURREGELUNGSVERFAHREN
ÉLÉMENT CHAUFFANT INTÉGRÉ À RÉGULATION ET ÉLÉVATION DE TEMPÉRATURE DE TYPE COMPOSITE ET PROCÉDÉ DE RÉGULATION DE TEMPÉRATURE

(30) Priority: 17.01.2020 CN 202010054217
(43) Date of publication of application: 26.10.2022
(73) Proprietor: Shenzhen Buddy Technology Development Co., Ltd, Shenzhen, Guangdong 518103 (CN)
(72) Inventor: LI, Hui, Shenzhen, Guangdong 518103 (CN); LIU, Xiang, Shenzhen, Guangdong 518103 (CN)
(74) Representative: Gille Hrabal Partnerschaftsgesellschaft mbB Patentanwälte
(86) International application number: PCT/CN2021/072120
(87) International publication number: WO 2021/143831

(56) References cited:
- WO-A1-2016/135331
- WO-A1-2019/038521
- WO-A1-2019/115464
- CN-A- 109 640 416
- CN-A- 111 150 109
- CN-B- 106 102 488
- CN-U- 203 851 801
- CN-U- 211 932 567
- US-A1- 2013 247 910
- US-A1- 2018 177 233

## Description

### TECHNICAL FIELD

The present invention belongs to the technical field of a heating element of new smoking implement and, especially relates to a composite-type temperature raising and control integrated heating element and a temperature control method.

### BACKGROUND

In the prior art, a heating element of a smoking implement for heat-not-burn tobacco rolls realizes heating and temperature measuring by providing a heating wire and a thermocouple on the heating element's main body. The heating element is prone to short-circuit because the heating wire and the thermocouple are arranged closely. Moreover, the process of producing the heating element is complicated. Additionally, a heating circuit and a temperature measuring circuit are designed separately, leading to an overall complex circuit.

WO2019038521A1 relates to a vaporiser assembly for use in a vapour provision system, wherein the vaporiser assembly comprises:a liquid transport element formed from cotton; and a heating element comprising a coil of resistive wire around a portion of the liquid transport element, wherein the heating element has an electrical resistance of between 1.3 ohms and 1.5 ohms. In addition to the portion of the resistance wire wound around the capillary wick to provide the heater , the vaporiser assembly further comprises electrical leads which pass through holes in the resilient plug to contact electrodes mounted to the end cap to allow power to be supplied to the heater via the electrical interface established when the cartridge is connected to a control unit. It can be seen that the function of the heater leads is only to conduct electricity and not to heat.

### SUMMARY

In order to solve the above-mentioned problem, the composite-type temperature raising and control integrated heating element of claim 1 as well as the method of claim 9 are provided. Preferred embodiments are described in the dependent claims.

In the first aspect, the present invention provides a composite-type temperature raising and control integrated heating element. The heating element 1 includes a heating body 4, which is integrated by welding two different conductive materials at a welding point 3. The heating element 1 is not provided with a temperature measuring element other than the heating body 4.

The two metal or alloy materials after being welded are configured to heat up under energized conditions, and serve as a thermocouple temperature measuring sensor for temperature measuring when not under energized conditions.

The position of the welding point 3 can be selected according to the temperature field distribution of the heating element. Usually, the position of the welding point 3 is the high-temperature position of the entire heating element.

Preferably, the two different conductive materials include two different metals or two different alloys, or one of the two materials is a metal and the other is an alloy.

Preferably, the shape of the heat element 1 includes a sheet structure, a rod structure, or a cup structure, and the heating body 4 is provided on the hollow interior or the outer wall of the sheet structure, the rod structure, or the cup structure.

Preferably, the heating element 1 further includes a shell 2.

The shell 2 is provided with a hollow cavity.

The heating body 4 is provided within the hollow cavity of the shell 2.

Two heating circuit pins 6 protruding out of the shell 2 are provided at ends of the heating body 4.

Preferably, the structure of the heating body 4 includes a spiral winding structure, a segmented spiral winding structure, or a broken line structure.

Preferably, the two different conductive materials of the heating body 4 include one of the following three combinations: a platinum-rhodium alloy and a platinum, a nickel-chromium alloy and a nickel-silicon alloy, and a nickel-chromium-silicon alloy and the nickel-silicon alloy.

Preferably, the inner wall of the hollow cavity of the shell 2 is provided with an insulating layer.

Preferably, the material of the shell 2 is selected from a ceramic, a metal, a metal oxide, or an alloy material.

The shape of the shell 2 is a hollow cylinder shape with a tip, or a sword shape.

Preferably, the shell 2 may be formed by pressing multiple pieces together, or may be formed integrally.

Preferably, the heating element further includes a base 5, and the base 5 is arranged at the bottom part of the heating element. The base 5 is configured to immobilize and protect the heating body 4.

In the second aspect, the present invention provides a temperature control method of the composite-type temperature raising and control integrated heating element. The heating element 1 in the first aspect is electrically connected to the anode and the cathode of a circuit control device by the two heating circuit pins 6 of the heating element 1. The temperature control method includes the following steps:
Step A: adjusting the circuit control device to supply the heating element 1 with a first voltage *V*₀ . At this time, current passes through the heating body 4, and the heating body 4 heats up as a heating body to achieve temperature control.

Step B: adjusting the circuit control device to stop supplying the voltage for the heating element 1. At this time, the heating body 4 serves as a thermocouple temperature measuring sensor to detect the temperature of the heating element 1 to achieve temperature detection.

Preferably, a process of the temperature control and the temperature detection is periodically achieved through the circuit control device by periodically adjusting the voltage supplied to the heating body 4 in a predetermined time.

The above-mentioned technical solutions can be freely combined under the precondition that the combination does not contradict.

The present invention has the following advantages.

The present invention provides designs for a temperature raising and control integrated heating element inventively, and a new method for temperature control of a heating element for the heat-not-burn tobacco rolls. The heating body is formed by welding two conductive materials. When a high voltage is applied, the two conductive materials serve as the heating body to generate heat. When supply of the voltage is stopped, the two conductive materials serve as a thermocouple temperature measuring sensor to measure the temperature of the heating element. Compared to existing heating elements, the temperature measuring sensor is omitted, the fabrication process of the heating element is simplified, the performance of the heating element is improved, the roasting effect of tobacco rolls is improved, the production costs are reduced, and a better user experience is brought to consumers.

### BRIEF DESCRIPTION OF THE DRAWINGS

FIG 1 is a schematic diagram of a composite-type temperature raising and control integrated heating element in Embodiment I.
FIG 2 is a temperature control and detection signal waveform diagram of composite-type temperature raising and control integrated heating element in Embodiment II.

Numerals symbols in the figures:
1-heating element, 2-shell, 3-welding point, 4-heating body, 5-base, and 6-heating circuit pin.

### DETAILED DESCRIPTION OF THE EMBODIMENTS

The present invention is further described in conjunction with the following embodiments.

### Embodiment I

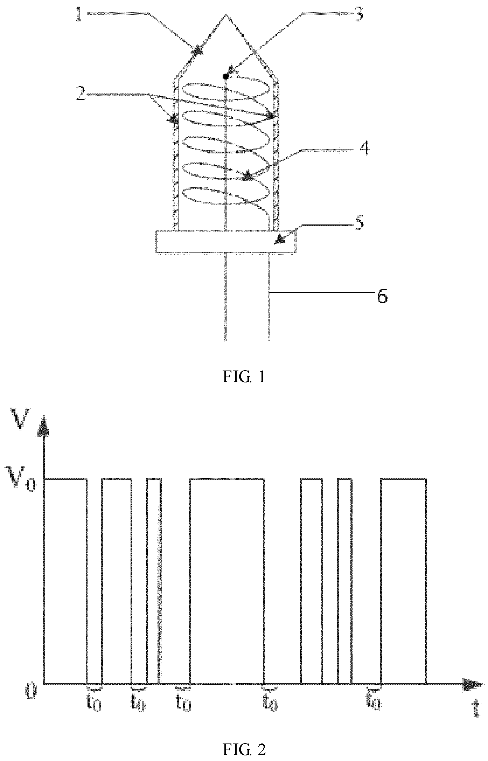

As shown in FIG 1, the composite-type temperature raising and control integrated heating element 1 includes a shell 2, a welding point 3, a heating body 4, and a base 5. The heating element 1 is not provided with a temperature measuring element other than the heating body 4.

The heating element 1 is in a rod shape with a tip. The shell 2 is formed by pressing two metal sheets together. The borders of the two sheets are pressed to be sealed, and a cavity is formed in the center. The heating body 4 is arranged in the cavity. The heating body 4 is integrated by welding two different alloy materials of nickel-chromium alloy and nickel-silicon alloy at the welding point 3. The heating body 4 has a threadlike structure in the form of a spiral winding, and two heating circuit pins 6 protruding out of the shell 2 and the base 5 are provided at the ends of the heating body 4. The base 5 is provided at the bottom of the heating element 1.

### Embodiment II

In a temperature measuring method for the composite-type temperature raising and control integrated heating element, the heating element 1 described in Embodiment I is electrically connected to the anode and the cathode of a circuit control device by the two heating circuit pins 6 of the heating element 1. The temperature control method includes the following steps.

As shown in FIG 2, during temperature control (in the state where the voltage is equal to the battery voltage), the temperature of the heating element 4 is controlled by adjusting the supplied voltage to the heating body 4 through a pulse-width modulation (PWM) regulation electronic switch. During temperature detection (in the state where the voltage is 0), the heating body 4 tests the temperature of the heating element in time t₀.

The above-mentioned embodiments are only specific implementations of the present invention, but the scope of protection of the present invention is not limited to these embodiments. Any variation or replacement that can be easily thought of by any person skilled in the art within the technical scope disclosed by the present invention shall be covered in the scope of protection of the present invention. Therefore, the scope of protection of the present invention shall be subject to the scope of protection of the claims.

## Claims

1. A composite-type temperature raising and control integrated heating element, wherein the heating element (1) comprises a heating body (4), the heating body (4) is integrated by welding two different conductive materials at a welding point (3); and the heating element (1) is not provided with a temperature measuring element other than the heating body (4);
the two different conductive materials after being welded are configured to heat up under energized conditions, and serve as a thermocouple temperature measuring sensor for temperature measuring when not under energized conditions.

2. The heating element according to claim 1, wherein the two different conductive materials comprise two different metals or two different alloys, or one of the two materials is a metal and the other is an alloy.

3. The heating element according to claim 1, wherein a shape of the heat element (1) comprises a sheet structure, a rod structure, or a cup structure; and the heating body (4) is provided on a hollow interior or an outer wall of the sheet structure, the rod structure, or the cup structure.

4. The heating element according to claim 1, wherein the heating element (1) further comprises a shell (2);
wherein the shell (2) is provided with a hollow cavity;
the heating body (4) is provided within the hollow cavity of the shell (2); and
two heating circuit pins (6) protruding out of the shell (2) are provided at ends of the heating body (4).

5. The heating element according to claim 1, wherein a structure of the heating body (4) comprises a spiral winding structure, or a segmented spiral winding structure, or a broken line structure.

6. The heating element according to claim 1, wherein the two different conductive materials of the heating body (4) comprise one of the following three combinations: a platinum-rhodium alloy and a platinum metal, a nickel-chromium alloy and a nickel-silicon alloy, and a nickel-chromium-silicon alloy and the nickel-silicon alloy.

7. The heating element according to claim 4, wherein an inner wall of the hollow cavity of the shell (2) is provided with an insulating layer.

8. The heating element according to claim 4, wherein a material of the shell (2) is selected from a ceramic, a metal, a metal oxide, or an alloy material.

9. A temperature control method of a composite-type temperature raising and control integrated heating element, wherein the heating element (1) according to claim 1 is electrically connected to an anode and a cathode of a circuit control device by the two heating circuit pins (6) of the heating element (1); and the temperature control method comprises the following steps:
step A: adjusting the circuit control device to supply the heating element (1) with a first voltage *V*₀ ; wherein at this time, a current passes through the heating body (4), and the heating body (4) heats up as a heating body to achieve temperature control; and
step B: adjusting the circuit control device to stop supplying the voltage for the heating element (1); wherein at this time, the heating body (4) serves as a thermocouple temperature measuring sensor to detect a temperature of the heating element (1) to achieve temperature detection.

10. The temperature control method according to claim 9, wherein a process of the temperature control and the temperature detection is periodically achieved through the circuit control device by periodically adjusting the voltage supplied to the heating body (4) in a predetermined time.

## Patentansprüche

1. Ein integriertes Heizelement vom Verbundtyp zur Temperaturerhöhung und -steuerung, wobei das Heizelement (1) einen Heizkörper (4) umfasst, der Heizkörper (4) durch Verschweißen zweier unterschiedlicher leitfähiger Materialien an einer Schweißstelle (3) integriert ist und das Heizelement (1) außer dem Heizkörper (4) nicht mit einem Temperaturmesselement versehen ist;
die zwei unterschiedlichen leitfähigen Materialien sind nach dem Schweißen so konfiguriert, dass sie sich unter Stromzufuhr erwärmen und im stromlosen Zustand als Thermoelement-Temperaturmesssensor zur Temperaturmessung dienen.

2. Das Heizelement nach Anspruch 1, wobei die zwei unterschiedlichen leitfähigen Materialien zwei unterschiedliche Metalle oder zwei unterschiedliche Legierungen umfassen oder eines der zwei Materialien ein Metall und das andere eine Legierung ist.

3. Das Heizelement nach Anspruch 1, wobei eine Form des Heizelements (1) eine Blechstruktur, eine Stabstruktur oder eine Becherstruktur umfasst und der Heizkörper (4) an einem hohlen Inneren oder einer Außenwand der Blechstruktur, der Stabstruktur oder der Becherstruktur angeordnet ist.

4. Das Heizelement gemäß Anspruch 1, wobei das Heizelement (1) ferner eine Hülle (2) umfasst; wobei die Hülle (2) mit einem hohlen Hohlraum versehen ist;
der Heizkörper (4) innerhalb des hohlen Hohlraums der Hülle (2) angeordnet ist; und
zwei aus der Hülle (2) herausragende Heizkreisstifte (6) an den Enden des Heizkörpers (4) vorgesehen sind.

5. Das Heizelement nach Anspruch 1, wobei eine Struktur des Heizkörpers (4) eine spiralförmige Wicklungsstruktur oder eine segmentierte spiralförmige Wicklungsstruktur oder eine gebrochene Linienstruktur umfasst.

6. Das Heizelement nach Anspruch 1, wobei die zwei unterschiedlichen leitfähigen Materialien des Heizkörpers (4) eine der folgenden drei Kombinationen umfassen: eine Platin-Rhodium-Legierung und ein Platinmetall, eine Nickel-Chrom-Legierung und eine Nickel-Silizium-Legierung sowie eine Nickel-Chrom-Silizium-Legierung und die Nickel-Silizium-Legierung.

7. Das Heizelement nach Anspruch 4, wobei eine Innenwand des hohlen Hohlraums der Hülle (2) mit einer Isolierschicht versehen ist.

8. Das Heizelement nach Anspruch 4, wobei ein Material der Hülle (2) aus einer Keramik, einem Metall, einem Metalloxid oder einem Legierungsmaterial ausgewählt ist.

9. Ein Verfahren zur Temperatursteuerung eines integrierten Heizelements vom Verbundtyp zur Temperaturerhöhung und -steuerung, wobei das Heizelement (1) gemäß Anspruch 1 über die zwei Heizkreisstifte (6) des Heizelements (1) elektrisch mit einer Anode und einer Kathode einer Schaltungssteuervorrichtung verbunden ist; und das Verfahren zur Temperatursteuerung die folgenden Schritte umfasst:
Schritt A: Einstellen der Schaltungssteuervorrichtung, um das Heizelement (1) mit einer ersten Spannung *V₀* zu versorgen; wobei zu diesem Zeitpunkt ein Strom durch den Heizkörper (4) fließt und der Heizkörper (4) sich als ein heizender Körper erwärmt, um eine Temperatursteuerung zu erreichen; und
Schritt B: Einstellen der Schaltungssteuervorrichtung, um die Versorgung des Heizelements (1) mit der Spannung zu beenden; wobei zu diesem Zeitpunkt der Heizkörper (4) als Thermoelement-Temperaturmesssensor dient, um eine Temperatur des Heizelements (1) zu erfassen, um eine Temperaturerfassung zu erreichen.

10. Das Verfahren zur Temperatursteuerung nach Anspruch 9, wobei ein Prozess der Temperatursteuerung und der Temperaturerfassung periodisch durch die Schaltungssteuervorrichtung erreicht wird, indem die dem Heizkörper (4) zugeführte Spannung in einer vorbestimmten Zeit periodisch eingestellt wird.

## Revendications

1. Élément chauffant de température augmentant de type composite et à contrôle intégré, dans lequel l'élément chauffant (1) comprend un corps chauffant (4), le corps chauffant (4) est intégré par soudage de deux matériaux conducteurs différents à un point de soudage (3) ; et l'élément chauffant (1) n'est pas fourni d'un élément de mesure de température autre que le corps chauffant (4) ;
les deux matériaux conducteurs différents, après avoir été soudés, sont configurés pour se chauffer sous conditions énergisées, et servent de capteur de mesure de température à thermocouple pour mesure de température lorsqu'ils ne sont pas sous conditions énergisées.

2. L'élément chauffant selon la revendication 1, dans lequel les deux matériaux conducteurs différents comprennent deux métaux différents ou deux alliages différents, ou l'un des deux matériaux est un métal et l'autre est un alliage.

3. L'élément chauffant selon la revendication 1, dans lequel une forme de l'élément chauffant (1) comprend une structure en feuille, une structure en tige ou une structure en coupelle ; et le corps chauffant (4) est fourni sur un intérieur creux ou une paroi extérieure de la structure en feuille, de la structure en tige ou de la structure en coupelle.

4. L'élément chauffant selon la revendication 1, dans lequel l'élément chauffant (1) comprend en outre une coque (2) ;
dans lequel la coque (2) est fournie d'une cavité creuse ;
le corps chauffant (4) est fourni à l'intérieur de la cavité creuse de la coque (2) ; et
deux broches de circuit chauffant (6) dépassant de la coque (2) sont fournies à des extrémités du corps chauffant (4).

5. L'élément chauffant selon la revendication 1, dans lequel une structure du corps chauffant (4) comprend une structure à enroulement spiralé, ou une structure à enroulement spiralé segmenté, ou une structure en ligne brisée.

6. L'élément chauffant selon la revendication 1, dans lequel les deux matériaux conducteurs différents du corps chauffant (4) comprennent l'une des trois combinaisons suivantes : un alliage platine-rhodium et un métal platine, un alliage nickel-chrome et un alliage nickel-silicium, et un alliage nickel-chrome-silicium et l'alliage nickel-silicium.

7. L'élément chauffant selon la revendication 4, dans lequel une paroi interne de la cavité creuse de la coque (2) est pourvue d'une couche isolante.

8. L'élément chauffant selon la revendication 4, dans lequel un matériau de la coque (2) est choisi parmi une céramique, un métal, un oxyde métallique ou un matériau d'alliage.

9. Procédé de contrôle de température d'un élément chauffant de température augmentant de type composite et à contrôle intégré, dans lequel l'élément chauffant (1) selon la revendication 1 est connecté électriquement à une anode et à une cathode d'un dispositif de contrôle de circuit par les deux broches de circuit de chauffage (6) de l'élément chauffant (1) ; et le procédé de contrôle de température comprend les étapes suivantes :
étape A : ajuster le dispositif de contrôle de circuit pour fournir l'élément chauffant (1) avec une première tension Vo ; dans lequel, à ce moment, un courant passe à travers le corps chauffant (4), et le corps chauffant (4) se chauffe comme corps chauffant pour atteindre un contrôle de température ; et
étape B : ajuster le dispositif de contrôle de circuit pour arrêter de fournir la tension pour l'élément chauffant (1) ; dans lequel, à ce moment, le corps chauffant (4) sert de capteur de mesure de température à thermocouple pour détecter une température de l'élément chauffant (1) pour atteindre une détection de température.

10. Le procédé de contrôle de température selon la revendication 9, dans lequel un processus du contrôle de température et de la détection de température est atteint périodiquement par le dispositif de contrôle de circuit, en ajustant périodiquement la tension fournie au corps chauffant (4) à un moment prédéterminé.
